(19) Europäisches Patentamt European Patent Office Office européen des brevets

(11) **EP 4 478 299 A1**

(12) **EUROPEAN PATENT APPLICATION**

(43) Date of publication:
**18.12.2024 Bulletin 2024/51**

(21) Application number: **23179253.2**

(22) Date of filing: **14.06.2023**

(51) International Patent Classification (IPC):
**G06V 10/62** (2022.01)  **G06V 20/52** (2022.01)

(52) Cooperative Patent Classification (CPC):
**G06V 20/52; G06V 10/62**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Axis AB**
**223 69 Lund (SE)**

(72) Inventors:
• **Yuan, Song**
**223 69 Lund (SE)**
• **Öhrn, Anton**
**223 69 Lund (SE)**
• **Danielsson, Niclas**
**223 69 Lund (SE)**

(74) Representative: **AWA Sweden AB**
**Box 5117**
**200 71 Malmö (SE)**

Remarks:
Amended claims in accordance with Rule 137(2) EPC.

(54) **IMAGE PARAMETER ADAPTED OBJECT RE-IDENTIFICATION IN VIDEO STREAMS**

(57)    The present invention generally relates to the field of camera surveillance, and in particular to object re-identification in video streams captured by a camera (100).

*Fig. 3*

EP 4 478 299 A1

## Description

TECHNICAL FIELD

The present invention generally relates to the field of camera surveillance, and in particular to object re-identification in video streams captured by a camera.

BACKGROUND

In camera surveillance, object detection and object tracking are important functionalities. When tracking an object in a video stream an object is observed at several instances and need to be re-identified as being the same object between instances by an algorithm.

Object re-identification is a technology that can be used to compare object observations to decide if two observations are of the same object or not. The observations of one object instance may be accumulated over a so called tracklet. The comparison can be done within one camera field of view or across different camera field of views.

Object re-identification algorithms rely on offline training. Based on their training the algorithms typically extract feature vectors, sometimes referred to as appearance vectors or re-identification vectors, from each object observation.

For re-identification, the task becomes to compare feature vectors accumulated over tracklets, and if two feature vectors are considered similar, the corresponding objects are assumed to be the same. Consequently, a detected object of a first instance can be re-identified as corresponding to a detected object of a second instance.

However, a sudden change in for example luminance level, color, or other image related parameters, pose problems for traditional object re-identification algorithms.

Accordingly, there is room for improvements with regards to object reidentification algorithms.

SUMMARY

In view of above-mentioned and other drawbacks of the prior art, it is an object of the present invention to provide improvements with regards to object re-identification that can better account for changes in image parameters.

According to a first aspect of the present invention, it is therefore provided a computer-implemented method for object re-identification in a camera, the method comprising: detecting, by an object detection algorithm, an object in a first set of image frames of a video stream captured by the camera; determining at least one image parameter of the first set of image frames, determining a first ReID-feature vector descriptive of the detection of the object in the first set of image frames; storing the at least one image parameter along with the first ReID-feature vector in a data storage device; detecting, by the object detection algorithm, an object in a subsequent set of image frames of the video stream captured by the camera; determining at least one image parameter of the subsequent set of image frames, determining at least one further ReID-feature vector descriptive of the detection of the object in the subsequent set of image frames, quantifying differences between the at least one image parameter of the first set of image frames and the at least one image parameter of the subsequent set of image frames, providing at least one reidentification algorithm configured take the first ReID-feature vector and the further ReID-feature vector as input to determine whether the object in the first set of image frames is the same object as in the subsequent set of image frames according to a re-identification threshold, adjusting the re-identification threshold to account for the quantified differences between the image parameters linked with the first Re-ID feature vector and the image parameters of the subsequent set of image frames, applying one re-identification algorithm to evaluate whether the object in the first set of image frames is the same object as in the further track of image frames, and providing an output of the outcome of the evaluation in the re-identification algorithm.

The present invention is based upon the realization that by quantifying differences in image parameters, a reidentification threshold can be adapted to account for the difference(s). It was therefore realized to store the at least one image parameter linked with the first ReID-feature vector. The stored at least one image parameter can be compared to the corresponding at least one image parameter in associated or linked with a subsequent ReID-feature vector. In case corresponding image parameters are relatively similar, a re-identification algorithm may operate as usual. However, if a quantified difference between the corresponding image parameters is too large, a re-identification threshold is adjusted to account for the differences and thereby enable for the re-identification algorithm to perform reidentification despite relatively large differences in image parameters.

A video stream is generally a set of consecutive image frames captured over time. The consecutive image frames collectively form the video stream.

A feature vector is generally an n-dimensional vector of numerical features that represent an object. This is a common representation of an object for e.g., machine learning algorithms which typically require a numerical representation of objects for facilitating for example data processing and statistical analysis.

It is appreciated that an object may herein refer to a material object, a person, or an animal, in other words, any type of object that may be captured in a video stream and that may be tracked. A material object may for example be a vehicle.

Re-identifying generally includes to tag or in some other way identify that the two detections belong to the same object or e.g., object ID.

Object detection algorithms are *per se* known and may be selected from a range of algorithms including convolutional neural networks (CNNs), recurrent neural networks, decision tree classifiers such as random forest classifiers that are also efficient for classification. In addition, classifiers such as support vector machine classifiers and logistic regression classifiers are also conceivable. An object detection algorithm may be an object tracker employing a convolutional neural network trained for detecting and tracking objects according to its training.

In one embodiment, the at least one re-identification algorithm is at least one neural network. Such neural network may be a convolutional neural network (CNN).

The network or algorithm configured or trained for re-identification is applied to crops of the detected objects. The object detection algorithm or network is thus preferably a separate network or algorithm.

Two ReID-feature vectors are compared to each other to determine if they belong to the same object. This matching step may be performed in different ways using different metrics and norms, but the aim is to judge the similarity between to ReID-feature vectors. For this, images may be mapped to a Euclidean space where distances directly correspond to a measure of similarity. For example, an L2 norm, i.e., to calculate the "Euclidean distance" between two vectors, may be used to determine the similarity. The L2 norm of the difference between the vectors may then be compared to the re-identification threshold. Other norms may also applicable, such as a Mahalanobis distance or norm.

There are multiple types of image parameters that are applicable for embodiments of the present invention. When differences between image parameters is performed, the quantification is between the same image parameter type.

An image parameter is a parameter that affects the image quality or an ability to identify an object in an image.

For example, in embodiments, the at least one image parameter may include light level, e.g., luminance, in the images. Light level changes may be caused by that gain is varied or that an exposure time is varied in the camera, or by changes in the monitored scene.

In another example, the at least one image parameter includes a color mapping of the images. For instance, when a white balance or color matrix in the camera change, so will also the color mapping. Furthermore, local tone mapping may also change in case of more local changes in the image frames. Additionally, also if day/night filters are changed, the color mapping may be altered.

In embodiments, the at least one image parameter may include a resolution of the images. In other words, if the resolution, e.g., caused by pixel density differences or scaling factor differences, the re-identification threshold may be adjusted to account for such differences.

In embodiments, the at least one image parameter may include object perspective or pose in the images. That is, if the pose of the object, or the perspective of the object changes between the first set of image frames and the subsequent set of image frames, the re-identification threshold may be adjusted to account for such perspective of pose changes.

In one possible implementation, only one image parameter is used. That is, the difference between only one image parameter linked with the first ReID-feature vector is compared to only one image parameter of the subsequent ReID-feature vector. The one quantified difference between the two image parameters of the same type, is used for the subsequent steps.

However, in some embodiments, the method may comprise quantifying differences between a set of the image parameters of the first set of image frames and a set of image parameters of the subsequent set of image frames. That is, a combination of differences between corresponding image parameters is used in the quantification. Adjusting the re-identification threshold is then performed on basis of a combination of quantified differences between image parameters.

In one embodiment, the data storage device may store multiple Re-ID feature vectors and linked respective at least one image parameter, the method may comprise: when the quantified difference exceeds a threshold, selecting, from the data storage device, another ReID feature vector which image parameters deviates the least from the at least one image parameter of the subsequent set of image frames among the multiple stored image parameters, and replacing the first Re-ID feature vector and the linked image parameters with the selected Re-ID feature vector and its linked image parameters for adjusting the re-identification threshold and applying the re-identification algorithm.

In other words, several subsequent ReID feature vectors are stored along with their linked at least one image parameter. Selecting another first ReID-feature vector with an image parameter that better matches the one of the subsequent, or present, ReID-feature vector means that the subsequent adjustment of the re-identification threshold can be reduced. In some possible implementations, the amount or degree of re-identification threshold adjustment may be evaluated, and if the adjustment exceeds some threshold, another ReID feature vector may be selected and used as the first ReID feature vector for the adjustment of the threshold and performing reidentification. To "replace" does not mean to replace in the data storage device, the meaning is that the another ReID-feature vector is used for the subsequent steps of the method instead of the first ReID feature vector.

Adjusting the re-identification threshold may be performed in different envisaged ways.

In one embodiment, the method may comprise providing multiple reidentification algorithms trained for different image parameter levels, wherein adjusting the re-identification threshold may comprise: selecting a re-identification algorithm that is best adapted for the quantified difference between the at least one image parameter. That is, different variants of the algorithm, such as different variants or trained networks are prepared and stored. The different networks are trained under different image parameter conditions, whereby the one network that is best suited for the present set of image parameters is selected. The selected algorithm and network operate with a re-identification threshold adjusted for the present set of image parameters. This allows for having better tailored reidentification algorithm or networks.

In another embodiment, the method may comprise providing one reidentification algorithm and adjusting the re-identification threshold for that one reidentification algorithm. That is, the re-identification threshold is adjusted for a given re-identification algorithm or network. This advantageously only requires a single reidentification algorithm or network.

In preferred embodiments, adjusting the threshold may be to increase the threshold. This advantageously reduces the risk of losing the tracking of an object due to poor matching in the re-identification algorithm caused by differences in image parameter levels.

In embodiments, adjusting the threshold may be to decrease the threshold to reduce the risk of false positive reidentifications. This provides for avoiding that the re-identification algorithm unintentionally produces similar ReID feature vectors for different objects.

According to a second aspect, there is provided a control unit for performing the method according to anyone of the herein disclosed embodiments.

Further embodiments of, and effects obtained through this second aspect of the present invention are largely analogous to those described above for the first aspect and the second aspect of the invention.

According to a third aspect of the present invention, there is provided a system comprising a camera for capturing images of a scene including objects, and a control unit according to the second aspect. The image acquisition device may be a camera, such as a surveillance camera.

Further embodiments of, and effects obtained through this third aspect of the present invention are largely analogous to those described above for the first aspect and the second aspect of the invention.

According to a fourth aspect of the present invention, there is provided computer program product comprising program code for performing, when executed by a control unit, the method of any of the herein discussed embodiments.

Further embodiments of, and effects obtained through this fourth aspect of the present invention are largely analogous to those described above for the other aspects of the invention.

A computer program product is further provided including a computer readable storage medium storing the computer program. The computer readable storage medium may for example be non-transitory, and be provided as e.g. a hard disk drive (HDD), solid state drive (SDD), USB flash drive, SD card, CD/DVD, and/or as any other storage medium capable of non-transitory storage of data.

Further features of, and advantages with, the present invention will become apparent when studying the appended claims and the following description. The skilled addressee realize that different features of the present invention may be combined to create embodiments other than those described in the following, without departing from the scope of the present invention.

BRIEF DESCRIPTION OF THE DRAWINGS

The various aspects of the invention, including its particular features and advantages, will be readily understood from the following detailed description and the accompanying drawings, in which:

Fig. 1A is a schematically illustrates an image capturing device according to embodiments of the invention;
Fig. 1B illustrates a convolutional neural network;
Fig. 1C schematically illustrates an overview of a neural network for reidentification;
Fig. 2A illustrates a first frame and object detections;
Fig. 2B illustrates a second frame and object detections;
Fig. 3 is a flow-chart of method steps according to embodiments of the invention;
Fig. 4A illustrates a first frame according to embodiments of the invention;
Fig. 4B illustrates a subsequent frame according to embodiments of the invention;
Fig. 5 illustrates a data storage storing ReID-feature vectors linked with image parameters according to embodiments of the invention;
Fig. 6A illustrates a control unit according to embodiments of the invention;
Fig. 6B illustrates a control unit according to embodiments of the invention; and
Fig. 7 is a flow-chart of method steps according to embodiments of the invention.

DETAILED DESCRIPTION

The present invention will now be described more fully hereinafter with reference to the accompanying drawings, in which currently preferred embodiments of the invention are shown. This invention may, however, be embodied in many different forms and should not be construed as limited to the embodiments set forth herein; rather, these embodiments are provided for thoroughness and completeness, and fully convey the scope of the invention to the skilled person. Like reference characters refer to like elements throughout.

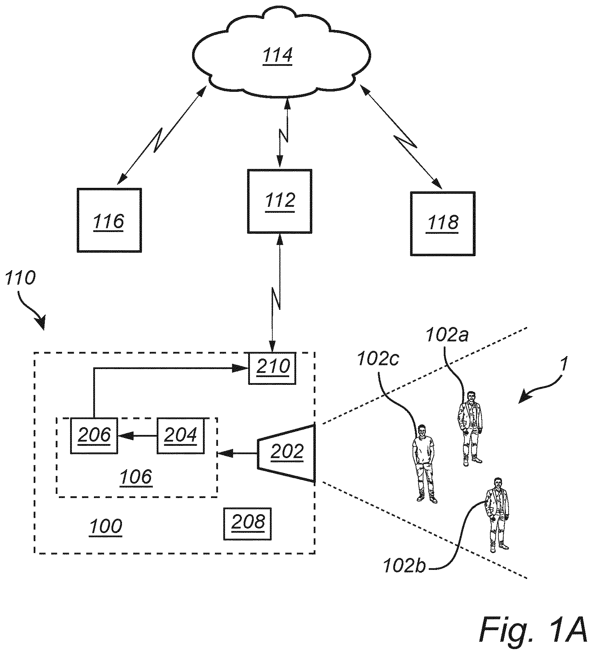

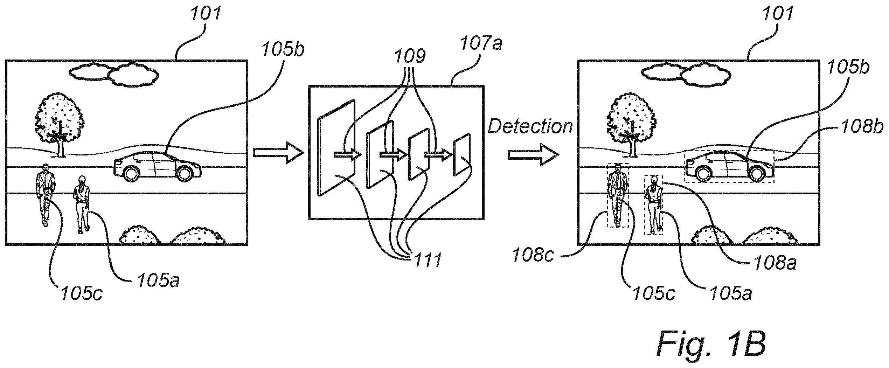

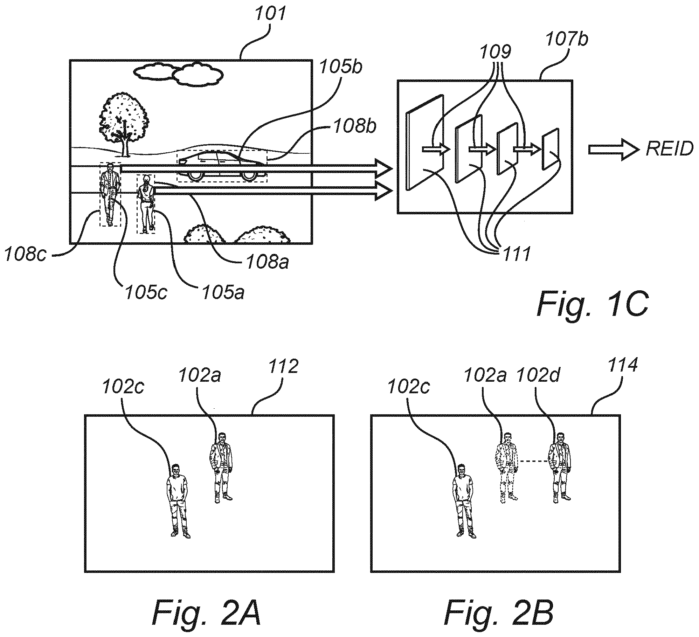

Turning now to the drawings and to fig 1 in particular, there is shown a scene 1 being monitored by an image capturing device 100, e.g., a camera or more specifically a surveillance camera. In the scene 1, there is a set of objects 102a-c, here exemplified as people present in the scene 1.

The camera 100 is continuously monitoring the scene 1 by capturing a video stream of images of the scene 1 and the objects 102a-c therein. The camera 100 and a control unit 106 are part of a system 110, where the control unit 106 may either be a separate stand-alone control unit or be part of the camera 100. It is also conceivable that the control unit 106 is remotely located such as on a server and thus operates as a Cloud-based service.

The camera 100 may be mounted on a building, on a pole, or in any other suitable position depending on the specific application at hand. Further the camera 100 may be a fixed camera or a movable camera such as pan, tilt and zoom, or even a body worn camera. Further, the camera 100 may be a visible light camera, an infrared (IR) sensitive camera or a thermal (long-wavelength infrared (LWIR)) camera. Further, image acquisition devices employing LIDAR and radar functionalities may also be conceivable. It is also envisaged that the camera 100 is a combination of the mentioned camera technologies.

The camera 100 further comprises an image capturing module 202, an image processing pipeline 204, an encoder 206, a data storage 208, and optionally an input and output interface 210 configured as a communication interface between the camera 100 and the network 114 via the radio link 112.

The image capturing module 202 comprises various components such as a lens and an image sensor, where the lens is adapted to project an image onto the image sensor comprising multiple pixels.

The image processing pipeline 204 is configured to perform a range of various operations on image frames received from the image sensor. Such operations may include filtering, demosaicing, color correction, noise filtering for eliminating spatial and/or temporal noise, distortion correction for eliminating effects of e.g., barrel distortion, global and/or local tone mapping, e.g., enabling imaging of scenes containing a wide range of intensities, transformation, e.g., rotation, flat-field correction, e.g., for removal of the effects of vignetting, application of overlays, e.g., privacy masks, explanatory text, etc. However, it should be noted that some of these operations, e.g., transformation operations, such as correction of barrel distortion, rotation, etc., may be performed by one or more modules, components or circuits arranged outside the image processing pipeline 204, for example in one or more units between the image processing pipeline 204 and the encoder 206.

Following the image processing pipeline 204, the image frames are forwarded to the encoder 206, in which the image frames are encoded according to an encoding protocol and forwarded to a receiver, e.g., the client 116 and/or the server 118, over the network 114 using the input/output interface 210. It should be noted that the camera 100 illustrated in fig. 1 also includes numerous other components, such as processors, memories, etc., which are common in conventional camera systems and whose purpose and operations are well known to those having ordinary skill in the art. Such components have been omitted from the illustration and description of fig. 1 for clarity reasons.

The camera 100 may also comprise the data storage 208 for optionally storing data relating to the capturing of the video stream. Thus, the data storage may store the captured video stream. The data storage may be a non-volatile memory, such as an SD card.

There are a number of conventional video encoding formats. Some common video encoding formats that work with the various embodiments of the present invention include: JPEG, Motion JPEG (MJPEG), High Efficiency Video Coding (HEVC), also known as H.265 and MPEG-H Part 2; Advanced Video Coding (AVC), also known as H.264 and MPEG-4 Part 10; Versatile Video Coding (WC), also known as H.266, MPEG-I Part 3 and Future Video Coding (FVC); VP9, VP10 and AOMedia Video 1 (AV1), just to give some examples.

Generally, the control unit 106 operates algorithms for object detection and for determining feature vectors of detected objects. Such algorithms may be selected from a range of algorithms including convolutional neural networks (CNNs), recurrent neural networks, decision tree classifiers such as random forest classifiers that are alos efficient for classification. In addition, classifiers such as support vector machine classifiers and logistic regression classifiers are also conceivable. The algorithms for object detection and for determining feature vectors of detected objects may run downstream of the image processing pipeline 204. However, it is envisaged that the algorithms run within the image processing pipeline 204 or even upstream of the image processing pipeline 204 depending on what type of image data the algorithm or algorithms have been trained on.

Fig. 1B schematically illustrates an overview of neural network prediction process. An image 101 acquired by a camera is input into a neural network model 107, here exemplified as a convolutional neural network, CNN, model. The image 101 includes image data indicative of a objects 105a-c belonging to different object classes, e.g., a person 105a, 105c and a vehicle 105b.

The operation of neural networks is considered known to the skilled person and will not be described in detail. However, generally, for a CNN model, convolutions of the input are used to compute the output. Local connections 109 are formed such that parts of an input layer is connected to a node in the output. In each layer 111 of a convolutional neural network, filters or kernels are applied whereby parameters or weights of the filters or kernels are learned during training of the convolutional neural network.

The neural network 107a may be a single-shot multibox detector with an enhanced map block (SSD-EMB). The input of the EMB may in such case be a feature map produced from convolutional layers. The output of the EMB is used as an input of the next convolutional layer. SSD-EMB networks are *per* se known to the skilled person.

Based on its training, the neural network model 107a provides an output of the detection that may subsequently be provided as an input to another neural network 107b trained for reidentification and illustrated in fig. 1C. The detections include the object class and crops or bounding boxes that include the image patches 108a-c of the detected objects.

The control unit 106 may operate the object detection algorithm or network which may have been trained on annotated training data representing different classes of features, for classifying features in the scene to belong to certain feature classes according to its training. The object detection is typically performed downstream of the image processing pipeline 204 but upstream of the encoder 206, or even on the server 118. It is also possible to perform classification upstream of the image processing pipeline 204 depending on what type of image data the algorithm has been trained on.

For training of a neural network, such as the CNN 107a, the network is fed with datasets comprising images having image patches annotated with at least one respective class, belonging to the class of the feature or object in the image patch. The images annotated with the different classes are provided to the neural network which feeds back on its predictions and performs validation steps, or training steps, to improve its predictions. More specifically, the neural network may backpropagate on its gradient of a loss function to improve model accuracy performance.

Fig. 1C schematically illustrates an overview of a neural network 107b for identification. The image patches 108a and 108c of the objects 105a, 105c that are here desirable to track are fed to the neural network 107b. The neural network 107b produces ReID-feature vectors for the detected objects 105a,c in the image patches 108a and 108c based on its training. Note that although the discussion herein is primarily focused on tracking persons, it is also envisaged the present invention is applicable to other objects such as vehicles 105b, in such case the image patch 108b is fed to the neural network 107b. Each image patch may be input to a respective neural network 107b and not necessarily to one common neural network for all image patches. The network 107b may be a classifier network which may be a CNN.

Fig. 2A illustrates a first image frame 112 and fig. 2B illustrates a subsequent image frame 114. For re-identification, subsequent feature vectors are compared, and if they are sufficiently similar the corresponding objects are considered the same. For example, a first ReID-feature vector produced from a first detection of the person 102a illustrated in frame 112 in fig. 2A, may be compared to the ReID-feature vector of a second detection of the person 102d illustrated in the frame 114 in fig. 2B in a new position compared to the position of object 102a in image frame 112. If the first ReID-feature vector and second ReID-feature vector are similar according to a re-identification threshold, the detections of person 102a in frame 112 is considered to belong to the same person as the detection of person 102d in frame 114, whereby person 102d can be re-identified as being the same as 102a such that the person can be tracked.

Several factors affect the accuracy of the re-identification algorithm in correctly re-identifying an object. If for example luminance, or other image parameters affect the ability for the algorithms to accurately detect and correctly identify objects. Embodiments of the present invention aim to alleviate this issue.

Embodiments of the present invention will now be described in more detail with reference to subsequent drawings.

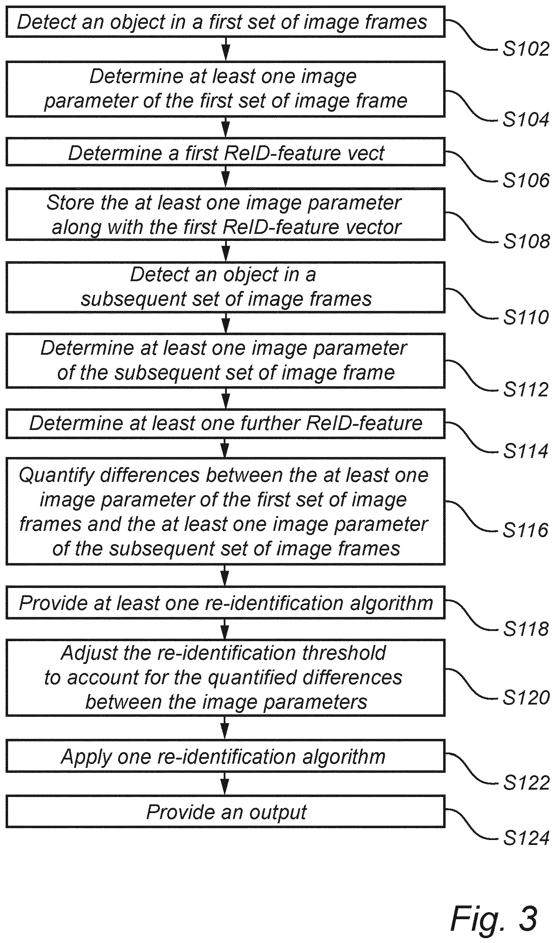

Fig. 3 is a flow-chart of method steps according to embodiments of the present invention. The method is a computer-implemented method for object reidentification in a camera, e.g., camera 100.

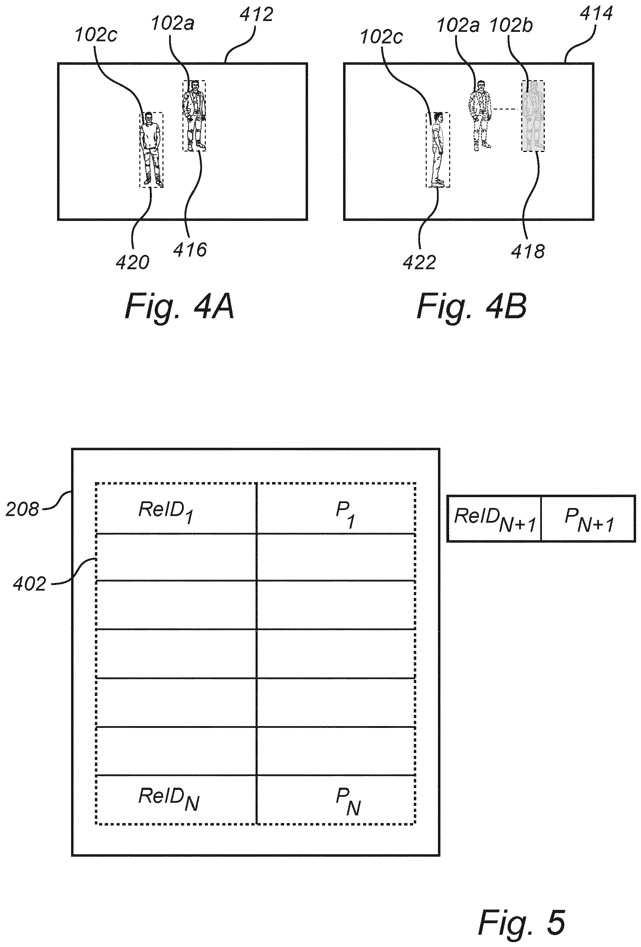

In step S102 detecting, by an object detection algorithm, for example run by the control unit 106, an object in a first set of image frames of a video stream captured by the camera. The first set of image frames may be considered a tracklet, that is, a short instance of an object. One image frame 412 in the first set of image frames is represented in fig. 4A including objects 102a and 102c.

In step S104, determining, by the control unit 106, at least one image parameter of the first set of image frames. An image parameter may be one or several of different type of image parameters. For example, the at least one image parameter may include one or more of light level of the images, a color mapping of the images, a resolution of the images, object perspective, and pose of an object in the images. Pose and perspective may be determined by finding and evaluating skeleton/key points in the images.

Determining an image parameter may be performed by analyzing the images or parameters of the imaging algorithm of the camera that control e.g., exposure time, gains, white balance, color matrix, or day/night filters, to mention a few examples.

In step S106, determining a first ReID-feature vector descriptive of the detection of the object in the first set of image frames including frame 412.

A feature vector A(x) may be represented by:

$$A = [a_1, a_2, a_3, a_4, a_5 \ldots, a_x \ldots, a_n]$$

The feature vector A comprises n feature indices x. The vector instances $a_1$-$a_n$ are numeric values.

In step S108, storing the at least one image parameter along with the first ReID-feature vector in a data storage 208. Fig. 5 illustrates a data storage 208 storing a structured table 402 of ReID-feature vectors $ReID_1$ to $ReID_N$ and associated image parameters $P_1$ to PN. In this way, the image parameters P are linked with the ReID-feature vectors ReID. Note that the image parameter notation P may include one or more image parameters linked with the respective ReID-feature vector.

In step S110, detecting, by the object detection algorithm run on control unit 106, an object in a subsequent set of image frames of the video stream captured by the camera. The subsequent set of image frames may be a second tracklet. One image frame 414 in the subsequent set of image frames is shown in fig. 4B.

Further, image crops 416 and 418 for the respective detected objects 102a and 102b are shown.

In step S112, determining, by the control unit 106, at least one image parameter of the subsequent set of image frames.

In step S114, determining, by the control unit 106, at least one further ReID-feature vector, $ReID_{N+1}$ descriptive of the detection of the object in the subsequent set of image frames.

In step S116, quantifying differences between the at least one image parameter of the first set of image frames and the at least one image parameter of the subsequent set of image frames. As illustrated in fig. 5, the image parameter $P_{N+1}$ of the subsequent ReID feature vector $ReID_{N+1}$ is compared with the image parameter $P_N$ of the previous, i.e., first ReID feature vector, e.g., $ReID_N$.

For example, luminance statistics may be considered for quantifying luminance levels, such as summing the luminance in blocks of pixels, e.g., 16x16 blocks of pixels.

The luminance or light levels of one or more image frames in a first tracklet may be calculated across all pixels, or more preferably only for the crop of the detected object. Similarly, the luminance of the subsequent set of image frames, or tracklet, is calculated, preferably only for the crop of the detected object. The quantified difference may be subtraction between the two calculated luminances or extracted luminance from luminance statistics. In a similar way, the accumulated light level across the image crop may be considered.

As a further example of image parameter, a resolution of the crops 416 and 418, and/or 420 and 422 can be determined. The resolution may be affected by for example scaling between subsequent detections as require for e.g., providing a suitable image size for the neural network performing the re-identification. A subtraction, or ratio, between the resolutions of crops can be used for quantifying the difference.

Additionally, quantifying color mapping differences may be realized by calculating sum of absolute difference (SAD) between the color matrices required for performing the color mapping. A color matrix is generally used by the color mapping algorithm for transforming the image colors to target colors. By comparing the color matrices, a quantification of the color mapping difference can be obtained.

Furthermore, a pose or perspective of the detection object may be evaluated by analyzing the skeleton-points of the detected objects. Quantifying the differences may here include to analyze the images frames in a pose specific neural network to model the pose and calculate the required transform to compensate for the different poses. A quantification of the required transform may be used as the quantified difference.

Although quantifying differences between image parameters preferably apply to one image parameter type at the time, it is envisaged that a set of image parameters may be considered simultaneously or collectively. That is, the control unit 106 may quantify differences between a set of the image parameters of the first set of image frames and a set of image parameters of the subsequent set of image frames.

As an example, consider the crop 416 in image frame 412 and the crop 418 in image frame 414. Between the frames 412 and 416, the luminance, or color mapping, tone, or resolution has changed, whereby the appearance or image conditions of the image crop 418 is different from those of crop 416. In another example, shown in fig 4A as the object 102c captured in crop 420 in frame 412, fig. 4A, and in crop 422 in frame 414 in fig. 4B, the pose and perspective of the detected object 102c has changed.

In step S118, providing at least one re-identification algorithm configured take the first ReID-feature vector and the further ReID-feature vector as input to determine whether the object in the first set of image frames is the same object as in the subsequent set of image frames according to a re-identification threshold.

The at least one re-identification algorithm may be at least one neural network 107b.

In step S120, adjusting, by the control unit 106, the re-identification threshold to account for the quantified differences between the image parameters linked with the first Re-ID feature vector and the image parameters of the subsequent set of image frames.

Adjusting the threshold may be performed as a function of the quantified difference q between the image parameters, for example, the adjustment D of the threshold may be:

$$D(q) = q(P1, ... Pk, .. Pn)$$

Where *q(Pk)* is the quantified difference as a function of the image parameters Pk. This function may be mathematically established, or it may be empirically determined from testing. A look-up table may store re-identification thresholds versus quantified differences between sets of image parameters. For example, by using test video-sequences of a single known person under different imaging parameter settings, statistics of qualifications and required thresholds may be used for generating a look-up table of re-identification thresholds versus quantified differences.

As a further example, determining or calibrating the adjustment of the thresholds may be performed by firstly considering different use cases, i.e., implementation settings or objects to track, for a specific neural network. For a given use case, the network may receive images that are identical but with different image parameter settings, for example different luminance, resolutions, color, etc. Preferably, one image parameter is considered at the time. This may be performed for a series of known image parameter settings, for the one image parameter, to achieve image parameter differences. The neural network calculates the ReID feature vectors for each of the different image parameter settings. The image parameter differences may be associated, for example in a graph or a table with their respective ReID feature vector difference as determined by a distance or norm discussed herein. The distance or norm may be for example an L2-norm, or whichever norm is intended. In this way, it can be investigated for which image parameter difference the ReID algorithm, i.e., neural network, can no longer correctly re-identify the person or object in the images. This is an indication of at which image parameter difference the threshold needs to be adjusted to account for the image parameter difference. The threshold should thus be adjusted until the neural network reliable re-identifies the person or object. This procedure may advantageously also be repeated at the present use case in a real setting.

Generally, a relatively larger quantified difference leads to a relatively larger threshold, and a relatively smaller quantified difference leads to a relatively smaller threshold.

In one implementation, adjusting the threshold may be to increase the threshold. This is advantageous when it is desirable to maintain a track even if the image conditions change. For example, the threshold may be a so-called L2 norm. Consider a further ReID-feature vector β represented by:

$$ B = \left[ b_1, b_2, b_3, b_4, b_5 \ldots, b_x, ., b_n \right] $$

For re-identification, the feature vectors 8 and A are fed into a metric function, or norm function to evaluate how similar the ReID-feature vectors 8 and A are. The L2 norm provides the Euclidean distance between the vectors given by:

$$ d(A, B) = \sqrt{\sum_i |a_i - b_i|^2} $$

The norm d is compared to a threshold to determine if the feature vectors are considered to belong to the same object or not. For example, if d is smaller than the threshold, the two object detections represented by ReID-feature vectors 8 and A are considered to be detections of the same object, whereas if d is larger than the re-identification threshold, the objects are not considered the same. the belong to the same. In case of relatively large, quantified differences between image parameters, the re-identification threshold may be increased so that larger deviation between ReID-feature vectors 8 and A is allowed but still result in positive identification.

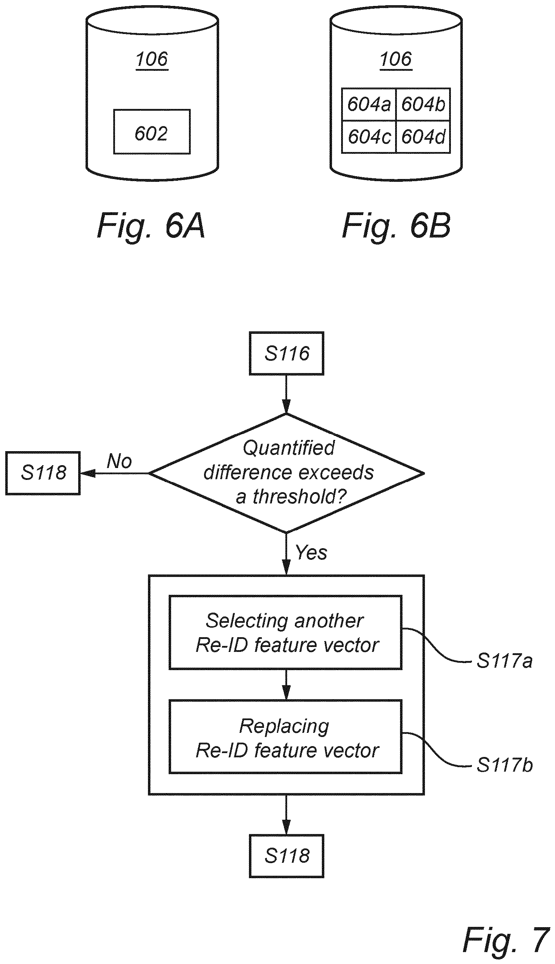

In one embodiment, the control unit 106 shown in fig. 6A operates a single reidentification algorithm 602, whereby only one re-identification algorithm is provided. Adjusting the re-identification threshold then means to adjust the threshold for that one re-identification algorithm 602.

In one embodiment, the control unit 106 shown in fig. 6B has access to multiple re-identification algorithms 604a-d trained for different image parameter levels. Adjusting the re-identification threshold here comprises selecting a reidentification algorithm among the re-identification algorithms 604a-d that is best adapted for the quantified difference between the at least one image parameter.

It is further envisaged that the control unit 106 can decrease the threshold, especially to reduce the risk of false positive reidentifications in cases where this is desirable.

In step S122, applying, by the control unit, one re-identification algorithm, that is, either the re-identification algorithm 602 with adjusted threshold or the one selected re-identification algorithm among the re-identification algorithms 604a-d, to evaluate whether the object in the first set of image frames is the same object as in the further set of image frames 416.

In step S124, providing, by the control unit, an output of the outcome of the evaluation in the re-identification algorithm. This output may be a signal to a graphical user interface indicating the tracking process.

Turning to the flow-chart in fig. 7 and the table in fig. 5. In some cases, it may occur that the quantified difference between the at least one image parameter of the present, i.e., subsequent set of image frames, and the at least one image parameter of the first set of image frames is relatively high, exceeding some threshold. With reference to fig. 5, where the ReID-feature vector and at least one image parameter of the subsequent set of image frames is represented by $ReID_{N+1}$ and $P_{N+1}$, and the ReID-feature vector and at least one image parameter of the first set of image frames may be represented by $ReID_N$ and $P_N$. If the quantified difference between image parameters $P_{N+1}$ and $P_N$ exceeds a threshold, selecting in step S117a, from the data storage device 208 storing multiple ReID feature vectors and linked respective at least one image parameter, another ReID feature vector which image parameters deviates the least from the at least one image parameter of the subsequent set of image frames among the multiple stored image parameters.

That is, the control unit 106 may search the database 402 for an image parameter Pk that best matches, meaning that the quantified difference between the present at least one image parameter $P_{N+1}$ and the one selected at least one image parameter $P_k$ is minimized among all image parameter sets $P_N$.

Once a new at least one image parameter $P_k$ is found, the first Re-ID feature vector and the linked image parameters is replaced, in step S117b, with the selected Re-ID feature vector $ReID_k$ and its linked at least one image parameter $P_k$ for adjusting the re-identification threshold and applying the re-identification algorithm. That is, the method proceeds in step S118 with the selected Re-ID feature vector $ReID_k$ and its linked at least one image parameter $P_k$.

There is further provided a computer program comprising instructions which, when the program is executed by a computer, cause the computer to carry out the method of any one of the herein disclosed embodiments. The computer program may be stored or distributed on a data carrier. As used herein, a "data carrier" may be a transitory data carrier, such as modulated electromagnetic or optical waves, or a non-transitory data carrier. Non-transitory data carriers include volatile and non-volatile memories, such as permanent and non-permanent storage media of magnetic, optical or solid-state type. Still within the scope of "data carrier", such memories may be fixedly mounted or portable.

The control unit includes a microprocessor, microcontrol unit, programmable digital signal processor or another programmable device. The control unit may also, or instead, include an application specific integrated circuit, a programmable gate array or programmable array logic, a programmable logic device, or a digital signal processor. Where the control unit includes a programmable device such as the microprocessor, microcontrol unit or programmable digital signal processor mentioned above, the processor may further include computer executable code that controls operation of the programmable device.

The control functionality of the present disclosure may be implemented using existing computer processors, or by a special purpose computer processor for an appropriate system, incorporated for this or another purpose, or by a hardwire system. Embodiments within the scope of the present disclosure include program products comprising machine-readable medium for carrying or having machine-executable instructions or data structures stored thereon. Such machine-readable media can be any available media that can be accessed by a general purpose or special purpose computer or other machine with a processor. By way of example, such machine-readable media can comprise RAM, ROM, EPROM, EEPROM, CD-ROM or other optical disk storage, magnetic disk storage or other magnetic storage devices, or any other medium which can be used to carry or store desired program code in the form of machine-executable instructions or data structures and which can be accessed by a general purpose or special purpose computer or other machine with a processor. When information is transferred or provided over a network or another communications connection (either hardwired, wireless, or a combination of hardwired or wireless) to a machine, the machine properly views the connection as a machine-readable medium. Thus, any such connection is properly termed a machine-readable medium. Combinations of the above are also included within the scope of machine-readable media. Machine-executable instructions include, for example, instructions and data which cause a general-purpose computer, special purpose computer, or special purpose processing machines to perform a certain function or group of functions.

Although the figures may show a sequence the order of the steps may differ from what is depicted. Also, two or more steps may be performed concurrently or with partial concurrence. Such variation will depend on the software and hardware systems chosen and on designer choice. All such variations are within the scope of the disclosure. Likewise, software implementations could be accomplished with standard programming techniques with rule-based logic and other logic to accomplish the various connection steps, processing steps, comparison steps and decision steps. Additionally, even though the invention has been described with reference to specific exemplifying embodiments thereof, many different alterations, modifications and the like will become apparent for those skilled in the art.

In addition, variations to the disclosed embodiments can be understood and effected by the skilled addressee in practicing the claimed invention, from a study of the drawings, the disclosure, and the appended claims. Furthermore, in the claims, the word "comprising" does not exclude other elements or steps, and the indefinite article "a" or "an" does not exclude a plurality.

**Claims**

1. A computer-implemented method for object re-identification in a camera (100), the method comprising:

    detecting (S102), by an object detection algorithm, an object (102a, 102c) in a first set of image frames (412) of a video stream captured by the camera;
    determining (S104) at least one image parameter of the first set of image frames,
    determining (S106) a first ReID-feature vector descriptive of the detection of the object in the first set of image frames;
    storing (S108) the at least one image parameter along with the first ReID-feature vector in a data storage device (208);
    detecting (S110), by the object detection algorithm, an object (102c, 102d) in a subsequent set of image frames (414) of the video stream captured by the camera;

determining (S112) at least one image parameter of the subsequent set of image frames, determining (S114) at least one further ReID-feature vector descriptive of the detection of the object in the subsequent set of image frames, quantifying (S116) differences between the at least one image parameter of the first set of image frames and the at least one image parameter of the subsequent set of image frames, providing (S118) at least one re-identification algorithm (602, 604a-d) configured take the first ReID-feature vector and the further ReID-feature vector as input to determine whether the object in the first set of image frames is the same object as in the subsequent set of image frames according to a re-identification threshold, adjusting (S120) the re-identification threshold to account for the quantified differences between the image parameters linked with the first Re-ID feature vector and the image parameters of the subsequent set of image frames, applying (S122) one re-identification algorithm to evaluate whether the object in the first set of image frames is the same object as in the further track of image frames, and providing (S124) an output of the outcome of the evaluation in the reidentification algorithm.

2. The method according to claim 1, wherein the data storage device (208) stores multiple Re-ID feature vectors and linked respective at least one image parameter, the method comprising:

when the quantified difference exceeds a threshold, selecting (S117a), from the data storage device, another Re-ID feature vector which image parameters deviates the least from the at least one image parameter of the subsequent set of image frames among the multiple stored image parameters, and
replacing (S117b) the first Re-ID feature vector and the linked image parameters with the selected Re-ID feature vector and its linked image parameters for adjusting the re-identification threshold and applying the re-identification algorithm.

3. The method according to any one of claims 1 and 2, comprising providing multiple re-identification algorithms (604a-c) trained for different image parameter levels, wherein adjusting the re-identification threshold comprising:
selecting a re-identification algorithm that is best adapted for the quantified difference between the at least one image parameter.

4. The method according to any one of claims 1 and 2, comprising providing one re-identification algorithm (602) and adjusting the re-identification threshold for that one re-identification algorithm.

5. The method according to any one of the preceding claims, wherein the at least one re-identification algorithm is at least one neural network.

6. The method according to any one of claims 1 and 2, wherein the at least one image parameter includes light level of the images.

7. The method according to any one of the preceding claims, wherein the at least one image parameter includes a color mapping of the images.

8. The method according to any one of the preceding claims, wherein the at least one image parameter includes a resolution of the images.

9. The method according to any one of the preceding claims, wherein the at least one image parameter includes object perspective or pose in the images.

10. The method according to any one of the preceding claims, wherein adjusting the threshold is to increase the threshold.

11. The method according to any one claims 1 to 9, wherein adjusting the threshold is to decrease the threshold to reduce the risk of false positive reidentifications.

12. The method according to any one of the preceding claims, comprising:
quantifying differences between a set of the image parameters of the first set of image frames and a set of image parameters of the subsequent set of image frames.

13. A control unit (106) for performing the method according to any one of the preceding claims.

14. A system (110) comprising a camera (100) for capturing images of a scene (1) including objects, and a control unit (106) according to claim 13.

15. A computer program product comprising program code for performing, when executed by a control unit, the method of any one of claims 1 to 12.

**Amended claims in accordance with Rule 137(2) EPC.**

1. A computer-implemented method for object re-identification in a surveillance camera (100), the method comprising:

detecting (S102), by an object detection algorithm, an object (102a, 102c) in a first set of image frames (412) of a video stream captured by the camera;

determining (S104) at least one image parameter of the first set of image frames,

determining (S106) a first ReID-feature vector descriptive of the detection of the object in the first set of image frames;

storing (S108) the at least one image parameter along with the first ReID-feature vector in a data storage device (208);

detecting (S110), by the object detection algorithm, an object (102c, 102d) in a subsequent set of image frames (414) of the video stream captured by the camera;

determining (S112) at least one image parameter of the subsequent set of image frames,

determining (S114) at least one further ReID-feature vector descriptive of the detection of the object in the subsequent set of image frames,

quantifying (S116) differences between the at least one image parameter of the first set of image frames and the at least one image parameter of the subsequent set of image frames,

providing (S118) at least one re-identification algorithm (602, 604a-d) configured take the first ReID-feature vector and the further ReID-feature vector as input to determine whether the object in the first set of image frames is the same object as in the subsequent set of image frames according to a re-identification threshold,

adjusting (S120) the re-identification threshold to account for the quantified differences between the image parameters linked with the first Re-ID feature vector and the image parameters of the subsequent set of image frames,

applying (S122) one re-identification algorithm to evaluate whether the object in the first set of image frames is the same object as in the further track of image frames, and

providing (S124) an output of the outcome of the evaluation in the re-identification algorithm.

2. The method according to claim 1, wherein the data storage device (208) stores multiple Re-ID feature vectors and linked respective at least one image parameter, the method comprising:

when the quantified difference exceeds a threshold, selecting (S117a), from the data storage device, another Re-ID feature vector which image parameters deviates the least from the at least one image parameter of the subsequent set of image frames among the multiple stored image parameters, and

replacing (S117b) the first Re-ID feature vector and the linked image parameters with the selected Re-ID feature vector and its linked image parameters for adjusting the re-identification threshold and applying the re-identification algorithm.

3. The method according to any one of claims 1 and 2, comprising providing multiple re-identification algorithms (604a-c) trained for different image parameter levels, wherein adjusting the re-identification threshold comprising:
selecting a re-identification algorithm that is best adapted for the quantified difference between the at least one image parameter.

4. The method according to any one of claims 1 and 2, comprising providing one re-identification algorithm (602) and adjusting the re-identification threshold for that one re-identification algorithm.

5. The method according to any one of the preceding claims, wherein the at least one re-identification algorithm is at least one neural network.

6. The method according to any one of claims 1 and 2, wherein the at least one image parameter includes light level of the images.

7. The method according to any one of the preceding claims, wherein the at least one image parameter includes a color mapping of the images.

8. The method according to any one of the preceding claims, wherein the at least one image parameter includes a resolution of the images.

9. The method according to any one of the preceding claims, wherein the at least one image parameter includes object perspective or pose in the images.

10. The method according to any one of the preceding claims, wherein adjusting the threshold is to increase the threshold.

11. The method according to any one claims 1 to 9, wherein adjusting the threshold is to decrease the threshold to reduce the risk of false positive reidentifications.

12. The method according to any one of the preceding claims, comprising:
quantifying differences between a set of the image parameters of the first set of image frames and a set of image parameters of the subsequent set of image frames.

13. A control unit (106) for performing the method according to any one of the preceding claims.

14. A system (110) comprising a surveillance camera (100) for capturing images of a scene (1) including objects, and a control unit (106) according to claim 13.

15. A computer program product comprising program code for performing, when executed by a control unit, the method of any one of claims 1 to 12.

*Fig. 1A*

Fig. 1B

Fig. 1C

Fig. 2A

Fig. 2B

```
┌────────────────────────────────────────────┐
│ Detect an object in a first set of image frames │ ──╮ S102
└────────────────────────────────────────────┘   │
                    ↓
┌────────────────────────────────────────────┐
│        Determine at least one image        │ ──╮ S104
│   parameter of the first set of image frame  │  │
└────────────────────────────────────────────┘
                    ↓
┌────────────────────────────────────────────┐
│       Determine a first ReID-feature vect     │ ──╮ S106
└────────────────────────────────────────────┘
                    ↓
┌────────────────────────────────────────────┐
│     Store the at least one image parameter   │ ──╮ S108
│     along with the first ReID-feature vector  │  │
└────────────────────────────────────────────┘
                    ↓
┌────────────────────────────────────────────┐
│           Detect an object in a            │ ──╮ S110
│      subsequent set of image frames         │  │
└────────────────────────────────────────────┘
                    ↓
┌────────────────────────────────────────────┐
│   Determine at least one image parameter     │ ──╮ S112
│     of the subsequent set of image frame     │  │
└────────────────────────────────────────────┘
                    ↓
┌────────────────────────────────────────────┐
│    Determine at least one further ReID-feature │ ──╮ S114
└────────────────────────────────────────────┘
                    ↓
┌────────────────────────────────────────────┐
│  Quantify differences between the at least one │
│    image parameter of the first set of image   │ ──╮ S116
│  frames and the at least one image parameter   │  │
│     of the subsequent set of image frames     │
└────────────────────────────────────────────┘
                    ↓
┌────────────────────────────────────────────┐
│  Provide at least one re-identification algorithm │ ──╮ S118
└────────────────────────────────────────────┘
                    ↓
┌────────────────────────────────────────────┐
│      Adjust the re-identification threshold   │
│   to account for the quantified differences   │ ──╮ S120
│         between the image parameters         │
└────────────────────────────────────────────┘
                    ↓
┌────────────────────────────────────────────┐
│     Apply one re-identification algorithm     │ ──╮ S122
└────────────────────────────────────────────┘
                    ↓
┌────────────────────────────────────────────┐
│             Provide an output             │ ──╮ S124
└────────────────────────────────────────────┘
```

Fig. 3

*Fig. 4A*

*Fig. 4B*

*Fig. 5*

Fig. 6A

Fig. 6B

Fig. 7

## EUROPEAN SEARCH REPORT

Europäisches
Patentamt
European
Patent Office
Office européen
des brevets

**Application Number**

EP 23 17 9253

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/091439 A1 (SHARMA VINAY [US] ET AL) 30 March 2017 (2017-03-30) * the whole document * | 1-15 | INV. G06V10/62 G06V20/52 |
| A | WU DI ET AL: "Deep learning-based methods for person re-identification: A comprehensive review", NEUROCOMPUTING, [Online] vol. 337, 1 April 2019 (2019-04-01), pages 354-371, XP93090639, AMSTERDAM, NL ISSN: 0925-2312, DOI: 10.1016/j.neucom.2019.01.079 Retrieved from the Internet: URL:https://pdf.sciencedirectassets.com/27 1597/1-s2.0-S0925231219X00077/1-s2.0-S0925 231219301225/main.pdf?X-Amz-Security-Token =IQoJb3JpZ2luX2VjEOH//////////wEaCXVzLWVhc 3QtMSJGMEQCIE+5TxRKXQ0bbNrPDDxckineOIBpkD5 L+CtK0GFAHdE+AiBtZSbj3H8vCvfZY+Ztz8U/GwQDV 17N0PM0igCRwJrxTiq8BQjq////////////8BEAUaDDA 10TAwMzU0N> [retrieved on 2023-10-12] * abstract * * page 355, column 2 * | 1-5, 13-15 | |

**TECHNICAL FIELDS SEARCHED (IPC)**

G06V

The present search report has been drawn up for all claims

| Place of search | Date of completion of the search | Examiner |
|---|---|---|
| The Hague | 13 October 2023 | Moreno, Marta |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
........................................................................
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

**EP 23 17 9253**

This annex lists the patent family members relating to the patent documents cited in the above-mentioned European search report.
The members are as contained in the European Patent Office EDP file on
The European Patent Office is in no way liable for these particulars which are merely given for the purpose of information.

**13-10-2023**

| Patent document cited in search report | Publication date | Patent family member(s) | Publication date |
|---|---|---|---|
| US 2017091439 A1 | 30-03-2017 | CN 108141445 A | 08-06-2018 |
| | | EP 3357210 A1 | 08-08-2018 |
| | | JP 6580783 B2 | 25-09-2019 |
| | | JP 2018536217 A | 06-12-2018 |
| | | US 2017091439 A1 | 30-03-2017 |
| | | WO 2017058323 A1 | 06-04-2017 |

EPO FORM P0459

For more details about this annex : see Official Journal of the European Patent Office, No. 12/82